# FASCICULE DE BREVET EUROPEEN

(11) **EP 1 366 935 B1**
(45) Date de publication et mention de la délivrance du brevet: **06.09.2006**
(21) Numéro de dépôt: 03011602.4
(22) Date de dépôt: 22.05.2003
(51) Int. Cl.: B60H 1/00

(54) **Dispositif de génération d'un flux d'air à température réglée et appareil comportant ce dispositif**
Vorrichtung zur Erzeugung einer temperaturgeregelten Luftströmung und Gerät mit einer solchen Vorrichtung
Device for generating a temperature controlled air flow and appliance comprising said device

(30) Priorité: 31.05.2002 FR 0206725
(43) Date de publication de la demande: 03.12.2003
(73) Titulaire: VALEO SYSTEMES THERMIQUES, 78321 Le Mesnil St Denis Cedex (FR)
(72) Inventeur: Vincent, Philippe, 28230 Epernon (FR)

(56) Documents cités:
- DE-C- 19 954 972
- FR-A- 2 789 629

## Description

L'invention concerne le domaine des dispositifs de chauffage et/ou de climatisation.

Plus précisément, elle concerne un dispositif de génération d'un flux d'air à température réglée, notamment pour un appareil de chauffage et/ou de climatisation de l'habitacle d'un véhicule, ayant une chambre de mixage et des sorties d'air raccordées à la chambre de mixage, le dispositif de génération comprenant au moins un conduit d'air froid, au moins un conduit d'air chaud dans lequel est disposé un radiateur de chauffage, des moyens de répartition d'un flux d'air principal engendré par l'appareil de chauffage entre le conduit d'air froid et le conduit d'air chaud.

On connaît des appareils de chauffage et/ou de climatisation de l'habitacle d'un véhicule qui comprennent un boîtier logeant un pulseur apte à générer un flux d'air qui est ensuite réparti entre un conduit d'air chaud et un conduit d'air froid. Un radiateur de chauffage monté dans le conduit d'air chaud permet de chauffer l'air avant de l'introduire dans l'habitacle du véhicule automobile. Afin de permettre à l'utilisateur de régler à sa convenance la température de l'air, l'appareil de ventilation et/ou de chauffage est équipé d'un dispositif de répartition de l'air qui permet de répartir le flux d'air principal en proportions variables entre le conduit d'air chaud et le conduit d'air froid.

Le dispositif de répartition permet également de faire fonctionner l'appareil dans un mode "tout chaud" et dans un mode "tout froid". Les flux d'air chaud et froid sont ensuite remélangés dans une chambre de l'appareil appelée chambre de mixage, comportant plusieurs sorties qui délivrent l'air à température réglée à des endroits appropriés de l'habitacle du véhicule automobile, par exemple une sortie de dégivrage, une sortie d'aération et une sortie de chauffage pieds, des volets étant prévus dans chacune de ces sorties pour contrôler sélectivement les sorties précitées.

Les volets de distribution permettent de définir différentes configurations de distribution de l'air en fonction du confort aérothermique souhaité par le ou les occupants du véhicule.

Le dispositif de génération d'un flux d'air à température réglée doit permettre la flexibilité de la mise au point aérothermique de l'appareil de chauffage. En particulier, il doit permettre de canaliser et de diriger le flux d'air vers des endroits préférentiels afin d'assurer une bonne répartition selon les différentes sorties et d'ajuster avec précision la quantité relative d'air chaud et froid et permettre un bon mélange des flux d'air chaud et froid pour chacune des sorties.

Il est également connu des dispositifs de génération d'un flux d'air à température réglée ayant une chambre de mixage et des sorties d'air raccordées à cette chambre, au moins un conduit d'air chaud dans lequel est disposé un radiateur de chauffage. Le dispositif comporte des moyens de répartition d'un flux d'air principal entre le conduit d'air froid et le conduit d'air chaud. Un tel dispositif est décrit dans DE 199 54 972. Ce dispositif comprend également un conduit d'air froid de dérivation injecté dans la zone dédiée à la conduite d'aération permettant ainsi de régler seulement la température de l'air sortant par les aérateurs de la planche de bord.

Un inconvénient des dispositifs des appareils de chauffage actuellement connus est qu'ils ne permettent pas d'acheminer suffisamment d'air froid vers toutes les sorties de la chambre de mixage. Par exemple, si le conduit d'air froid est disposé à la partie inférieure de l'appareil, les sorties situées à la partie supérieure de la chambre de mixage, généralement la sortie de dégivrage, ne seront pas alimentées convenablement en air froid. Ces appareils ne permettent donc pas une bonne mise au point aérothermique.

L'invention a pour but de procurer un appareil de chauffage et/ou de climatisation de l'habitacle du véhicule automobile et un dispositif de génération d'un flux d'air à température réglée qui remédie à ces inconvénients.

Ce but est atteint, conformément à l'invention, par le fait que le dispositif de génération d'un flux d'air comporte au moins un conduit de fuite autorisant au moins une fuite d'air froid injectée dans la chambre de mixage et un organe de calibration pour régler la fuite d'air froid, cet organe de calibration étant actionné par une commande indépendante de la configuration des moyens de répartition du flux d'air principal entre le conduit d'air chaud et le conduit d'air froid.

Ce dispositif présente deux avantages. D'une part, le conduit de fuite permet d'amener un débit de fuite d'air froid dans un endroit de la chambre de mixage qui ne pourrait pas être alimenté en air froid en l'absence de ce conduit. Par conséquent, il permet une mise au point aérothermique satisfaisante pour les sorties situées à proximité du conduit de fuite. Le conduit de fuite peut être disposé en un endroit approprié quelconque de l'appareil. Par exemple, si le conduit d'air froid est situé en partie inférieure de l'appareil, le conduit de fuite sera situé à l'opposé en partie supérieure de l'appareil.

Ainsi, si le conduit d'air froid est situé au-dessous du conduit d'air chaud, le conduit de fuite sera situé au-dessus du conduit d'air chaud. Le conduit de fuite peut être placé aussi, par exemple, soit latéralement par rapport au conduit d'air chaud, soit au dessus et latéralement par rapport au conduit d'air chaud.

Par ailleurs, le débit de fuite peut être réglé indépendamment de la configuration des moyens de répartition du courant d'air principal. Il peut donc être adapté au mode de diffusion de l'air dans l'habitacle, quelle que soit la température réglée de l'air.

Avantageusement, la commande de l'organe de calibration est liée à la cinématique de l'un des volets de distribution de l'appareil de chauffage.

De préférence, l'organe de calibration est lié à la cinématique du volet du conduit de dégivrage.

Dans une réalisation particulière, l'organe de calibration est réalisé d'une seule pièce avec l'un des volets de distribution de l'appareil, par exemple le volet du conduit de dégivrage. Toutefois, cette caractéristique n'est pas impérative et l'organe de calibration peut être constitué par une pièce séparée des volets de distribution.

Dans un mode de réalisation préféré, le dispositif comporte un clapet d'obturation du conduit de fuite commandé indépendamment de la configuration des moyens de distribution. Avantageusement, la commande du clapet d'obturation est liée à la configuration des moyens de répartition.

Les moyens de répartition peuvent être réalisés de différentes manières. Ils peuvent être constitués, par exemple, par un simple volet de mixage en drapeau ou papillon. Toutefois, dans une variante plus sophistiquée, les moyens de répartition comportent au moins un panneau comportant au moins un ajour disposé dans le conduit d'air chaud, et une plaque obturatrice mobile entre une position d'ouverture dans laquelle elle ne recouvre pas l'ajour du panneau et une position d'obturation dans laquelle elle obture le panneau, au moins un volet de réglage de la section de passage du conduit d'air froid mobile entre une position d'ouverture et une position d'obturation, un mécanisme de commande pour commander de manière synchronisée le déplacement de la plaque obturatrice et le déplacement du volet de réglage de la section de passage du conduit d'air froid entre leur position d'ouverture et leur position de fermeture.

Avantageusement, le panneau comporte une pluralité d'ajours et la plaque obturatrice une pluralité de découpes, les ajours du panneau et les découpes de la plaque obturatrice étant disposés les uns par rapport aux autres de telle manière que le conduit d'air chaud est obturé quand la plaque obturatrice est dans sa position d'obturation.

Avantageusement, la plaque obturatrice se déplace selon un mouvement combiné de translation et de rotation, la plaque obturatrice étant écartée du panneau en position d'ouverture.

Des caractéristiques additionnelles complémentaires ou alternatives de l'invention sont énumérées ci-après :
- le dispositif comporte un clapet d'obturation unique ;
- le dispositif comporte au moins deux clapets d'obturation implantés latéralement ;
- le clapet d'obturation est intégré aux moyens de répartition;
- le clapet d'obturation est rapporté sur les moyens de répartition ;
- le clapet d'obturation est articulé sur les moyens de répartition par des moyens d'articulation ;
- les moyens d'articulation comprennent un surmoulage en matière élastique ;
- la course de déplacement du clapet d'obturation est réduite par rapport à celle des moyens de répartition ;
- le clapet d'obturation est muni de moyens d'étanchéité ;
- les moyens d'étanchéité sont constitués par un joint en mousse ;
- les moyens d'étanchéité sont constitués par une lèvre d'étanchéité ;
- la lèvre d'étanchéité est intégrée au clapet d'obturation ;
- la lèvre d'étanchéité est surmoulée sur le clapet.

D'autres caractéristiques et avantages de la présente invention apparaîtront encore à la lecture de la description qui suit d'exemples de réalisation donnés à titre illustratif en référence aux figures annexées. Sur ces figures :
- la Figure 1 est une vue en coupe d'un appareil de chauffage et/ou de climatisation de l'habitacle d'un véhicule automobile comportant un dispositif de génération d'un flux d'air conforme à la présente invention ;
- la Figure 2 est une vue en coupe d'une variante de réalisation particulière d'un appareil de chauffage et/ou de climatisation comportant un dispositif de génération d'un flux d'air conforme à la présente invention ;
- la Figure 3 est une vue en coupe de l'appareil représenté sur la Figure 2 dans une configuration de fonctionnement pieds-aération ;
- la Figure 4 est une vue en coupe de l'appareil représenté sur les Figures 2 et 3 en mode pieds-dégivrage ;
- la Figure 5 est une configuration de l'appareil en mode dégivrage ;
- la Figure 6 est une vue en coupe de l'appareil en position "tout chaud" ;
- la Figure 7 est une vue de détail en perspective montrant un clapet d'obturation unique rectangulaire, implanté au centre de l'appareil ;
- la Figure 8 est une vue de détail en perspective montrant un double clapet d'obturation ;
- la Figure 9 est une vue de détail en perspective analogue à la Figure 8 montrant une variante de réalisation dans un appareil à répartition droite/gauche ;
- les Figures 10, 11 et 12 sont des vues de détail de clapets d'obturation articulés ;
- les Figures 13 et 14 représentent deux exemples de réalisation de moyens d'étanchéité entre le clapet d'obturation et le corps de l'appareil de chauffage.

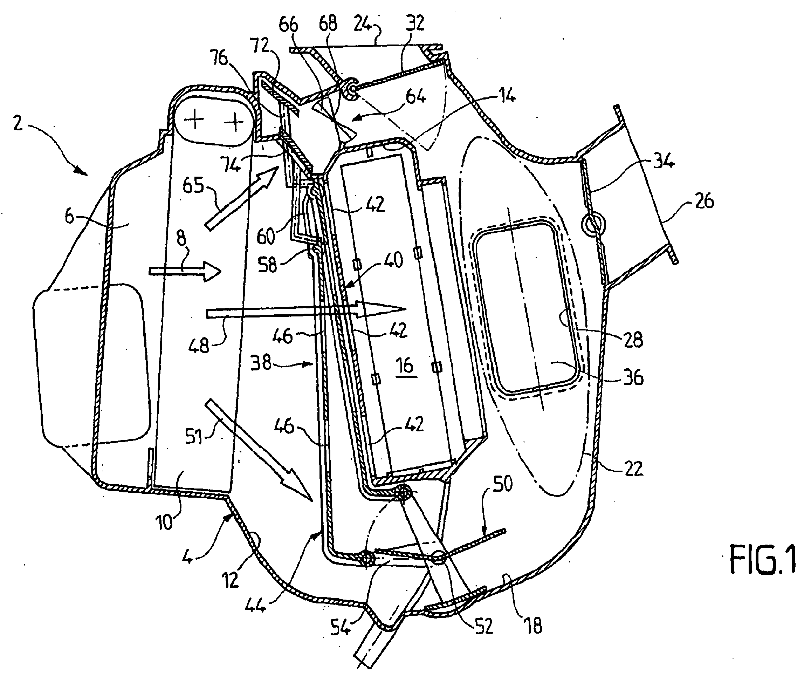

On a représenté sur la Figure 1 une vue générale en coupe d'un appareil de chauffage, de climatisation et de ventilation, désigné par la référence 2. Il comporte un boîtier 4 dans lequel est aménagée une arrivée d'air 6 d'un flux d'air principal schématisé par la flèche 8. Un évaporateur 10 est monté dans un conduit principal 12 du boîtier 4. Le conduit principal se divise en un conduit chaud 14 dans lequel est monté un radiateur de chauffage 16 et un conduit froid 18 parallèle au conduit chaud 14 et situé en dessous de celui-ci. Le flux d'air principal 8 peut être réparti en proportions réglables entre le conduit chaud 14 et le conduit froid 18.

L'air est ensuite dirigé vers des points d'utilisation au moyen de canalisations de sortie. Dans l'exemple représenté, on trouve une sortie 24 de dégivrage/désembuage du pare-brise, une sortie de ventilation 26 menant à des aérateurs de planche de bord, une sortie 28 de chauffage pieds. Des volets de réglage, désignés respectivement par les références 32, 34 et 36, permettent de régler au gré des utilisateurs la quantité d'air qui circule par chacune de ces sorties.

Les fonctions d'obturation du conduit chaud 14 et du conduit froid 18, ainsi que la fonction de répartition du flux d'air principal 8 entre ces deux conduits sont obtenues au moyen d'un dispositif de répartition 38, encore appelé dispositif de mixage. Ce dispositif pourrait être constitué, classiquement, par un volet en drapeau ou un volet papillon. Toutefois, dans l'exemple représenté, le dispositif de répartition 38 comprend un panneau 40 monté en position fixe dans le boîtier 4 et comportant des ajours 42, au nombre de trois dans l'exemple. Le dispositif de répartition 38 comporte également une plaque obturatrice 44 comportant des ouvertures 46. La plaque d'obturation 44 est mobile entre une position d'obturation et une position d'ouverture.

Dans la position d'obturation, représentée en traits interrompus sur la Figure, les ajours du panneau 40 et les ouvertures de la plaque d'obturation ne se chevauchent pas, de telle sorte que la superposition de la plaque obturatrice et du panneau obture complètement le conduit chaud 14. Dans la position d'ouverture, représentée en traits pleins sur la figure, la plaque obturatrice est espacée du panneau 40 de manière que les ajours du panneau et les ouvertures de la plaque ne se recouvrent pas, ce qui permet le passage de l'air, comme schématisé par la flèche 48.

Le dispositif de répartition 38 comprend également un élément d'obturation du conduit d'air froid 18. Dans l'exemple, cet élément est constitué par un volet 50 monté rotatif autour de son axe 52. Le volet 50 est apte à pivoter entre une position ouverte, représentée en traits pleins sur la figure, et une position d'obturation, représentée en traits tiretés, dans laquelle les extrémités du volet 50 viennent en appui sur des portées aménagées dans le boîtier afin d'obturer le conduit froid 18 de manière étanche. En position ouverte, un flux d'air circule dans le conduit froid 18, comme représenté par la flèche 51.

Le mouvement de rotation du volet 50 peut être commandé depuis l'extérieur du boîtier 4, par exemple par l'intermédiaire de l'axe 52 dont le volet 50 est solidaire. Le volet 50 comporte un bras 54 dont l'extrémité libre est articulée à l'extrémité inférieure de la plaque obturatrice 44. A son extrémité supérieure, la plaque obturatrice 44 comporte deux pions 58 qui sont aptes à coulisser chacun dans une rampe 60 aménagée dans le boîtier 4. Ainsi, le mouvement du volet 50 est une simple rotation, tandis que le mouvement de la plaque obturatrice est un mouvement combiné de rotation et de translation.

Conformément à l'invention, le dispositif de génération d'un flux d'air à température réglée comporte un canal de fuite 64 apte à permettre le passage d'une fuite d'air froid, comme schématisé par la flèche 65. Dans l'exemple, le canal de fuite 64 est situé à la partie supérieure de l'appareil, alors que le conduit d'air froid 18 est situé à la partie inférieure de l'appareil, en dessous du radiateur de chauffage 16. Un volet de calibration 66, dans l'exemple un volet papillon monté tournant autour de son axe 68, permet de calibrer le débit de la fuite d'air à travers le conduit de fuite 64. Le volet papillon 66 peut pivoter entre une position entièrement fermée, dans laquelle il interdit tout passage d'air froid à travers le conduit 64, à une position entièrement ouverte, dans laquelle le conduit est entièrement libre pour le passage d'une fuite d'air froid.

Conformément encore à l'invention, la position du volet de calibration 66 est commandée indépendamment de la position des moyens de répartition du flux d'air, à savoir, dans l'exemple représenté, la plaque obturatrice 44 et le volet papillon 50. On remarque, en effet, que la plaque obturatrice et le volet 50 sont liés mécaniquement l'un à l'autre. Le degré d'ouverture de l'un des organes détermine le degré d'ouverture de l'autre de manière univoque. Ainsi, lorsque le volet 50 est entièrement ouvert, la plaque obturatrice ferme complètement le passage d'air chaud et inversement.

Au contraire, la position du volet de calibration 66 peut être réglée indépendamment de la répartition du flux d'air. Par exemple, le canal de fuite 64 peut être complètement ouvert alors que le conduit d'air froid 18 est entièrement ou partiellement fermé. Le flux d'air chaud 46 et le flux d'air froid 51 se mélangent ensuite dans une chambre 22, appelée chambre de mixage, située en aval des conduits chaud et froid 16 et 18. Cette chambre de mixage 22 est représentée schématiquement par un ovale en traits interrompus. A partir de la chambre de mixage 22, l'air est distribué à température convenable par les trois sorties 24, 26 et 28 mentionnées précédemment.

Par ailleurs, le dispositif comporte encore un clapet d'obturation 72 mobile entre une position ouverte et une position fermée. Dans sa position fermée, le clapet d'obturation obture un orifice de passage 74 situé à l'entrée du conduit de fuite 64. Le conduit 64 est alors fermé, quelle que soit la position du volet de calibration 66. Au contraire, dans la position ouverte du clapet d'obturation 72, le débit de fuite est réglé par le volet de calibration 66. Le clapet d'obturation 72 peut être commandé par les moyens de répartition de l'air. Il peut, par exemple, comme représenté sur la Figure 1, être monté sur une tige 76 reliée à l'extrémité supérieure de la plaque obturatrice 44. En d'autres termes, le volet de calibration 66 et le clapet d'obturation 72 sont commandés indépendamment l'un de l'autre. Alors que le volet de calibration est lié, généralement, à la configuration de distribution, le clapet d'obturation, au contraire, est lié à la configuration de répartition de l'air.

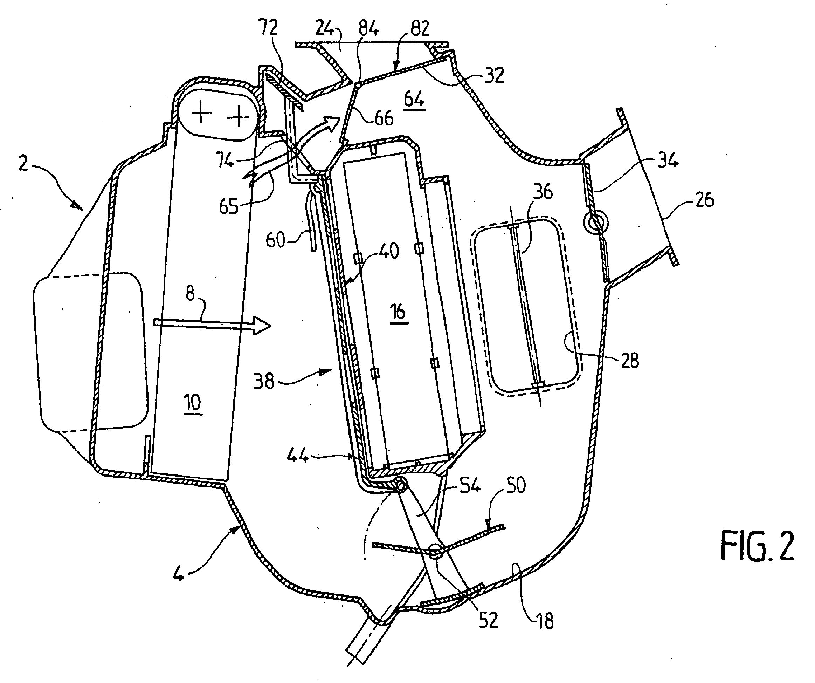

On a représenté sur la Figure 2 une vue en coupe d'une réalisation particulière du dispositif de l'invention. La particularité de ce dispositif réside dans le fait que le volet de réglage 32 de la sortie de dégivrage 24 et le volet 66 de calibration de la fuite d'air froid sont formés d'une seule pièce. Ils constituent un ensemble de réglage monobloc 82 qui pivote autour d'un axe 84 commun. Les volets 32 et 66 fonctionnent dans le même sens. La sortie de dégivrage 24 est fermée lorsque le volet 66 obture le conduit de fuite 64. Par conséquent, dans ce mode de réalisation, le réglage de la sortie de fuite est lié à la fonction distribution et, plus précisément, à la fonction dégivrage. Toutefois, dans d'autres réalisations, le volet de calibration 66 pourrait être lié au volet de ventilation 34 ou au volet 36 de réglage de la sortie de chauffage pieds.

Sur la Figure 2, le dispositif est représenté en mode "chauffage pieds". En effet, le volet 36 de réglage de la sortie 28 de chauffage pieds est en position ouverte, alors que le volet 34 de la sortie de ventilation 26 est en position fermée. Par ailleurs, le dispositif de répartition d'air 38 est en position "tout froid". En effet, comme on peut l'observer, la plaque obturatrice 44 obture les ajours du panneau 40 de telle sorte que le conduit d'air chaud 18 est entièrement obturé. La présence d'une fuite d'air froid n'est pas utile en principe parce qu'il s'agit d'un mode de distribution simple, c'est-à-dire que la diffusion d'air se fait par une sortie unique, la sortie de chauffage pieds dans la configuration représentée, mais il pourrait s'agir également de la sortie de ventilation. Par suite, il n'y a pas de stratification de température à gérer entre les diverses sorties. C'est la raison pour laquelle le volet 66 de calibration obture le conduit 64. Toutefois, une petite fuite d'air froid pourrait néanmoins être envisagée pour parfaire l'homogénéité de température dans la sortie concernée, la sortie de chauffage pieds 28 sur la Figure 2.

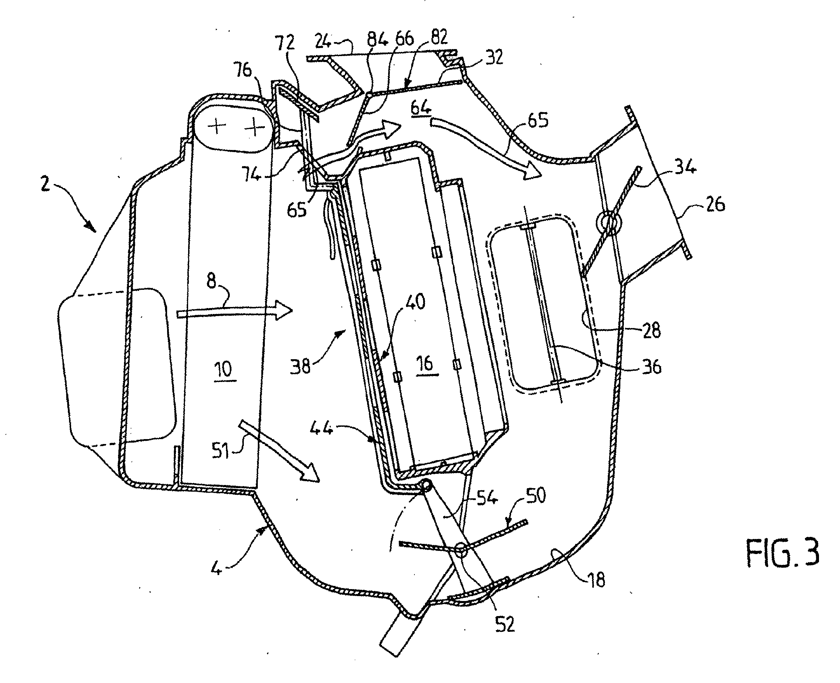

Sur la Figure 3, le dispositif de l'invention se trouve dans un mode à deux niveaux de distribution de l'air, à savoir en position pieds-aération. En d'autres termes, la sortie de ventilation 26 et la sortie de chauffage pieds 28 sont ouvertes simultanément. La sortie de dégivrage 24 est fermée. Dans cette configuration également, les moyens de répartition du 'flux principal d'air sont en position "tout froid", de sorte que la totalité du flux d'air principal 8 passe par le conduit d'air froid 18, comme schématisé par la flèche 51, à l'exception d'une fuite d'air froid, schématisée par la flèche 65, s'écoulant à travers le conduit de fuite 64. Le volet de calibration 66 autorise un passage d'air froid sous sa partie arrière afin d'acheminer un léger flux d'air froid 65 dans la chambre de mixage et principalement vers la sortie de ventilation 26. Ce flux d'air contribue ainsi à générer la stratification de température requise entre la sortie de ventilation et la sortie de chauffage pieds concernées par ce mode de distribution. L'importance de la fuite d'air 65 est calibrée par le degré d'ouverture du volet 66.

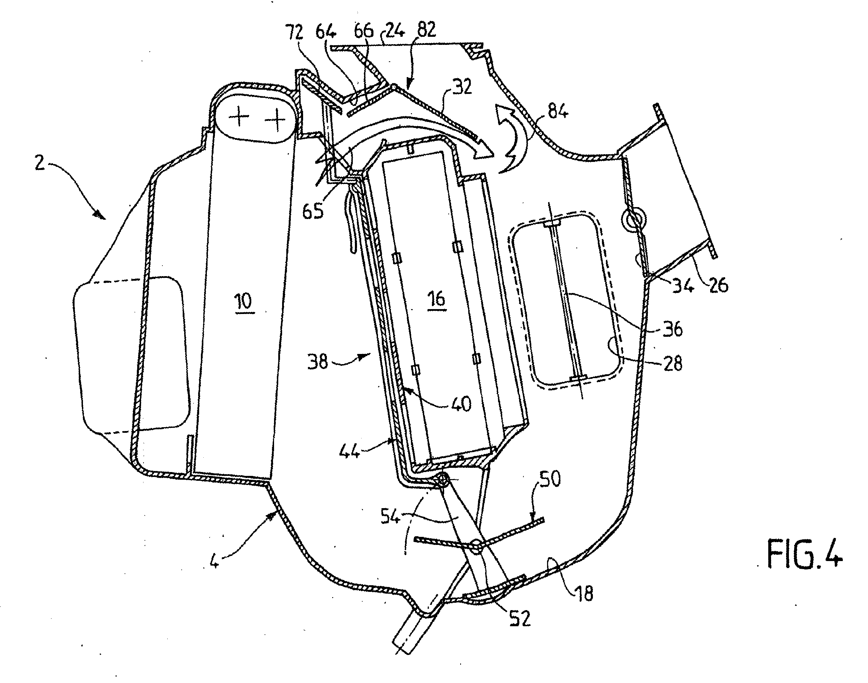

Sur la Figure 4, le dispositif de distribution de l'air est également dans un mode de distribution à deux niveaux, à savoir chauffage pieds et dégivrage. Le volet 34 de la sortie de ventilation 26 est fermé, tandis que le volet 36 de la sortie de chauffage pieds et le volet 32 de la sortie de dégivrage 24 sont ouverts. Le dispositif de répartition de l'air 38 est en configuration "tout froid". Dans cette configuration, c'est le volet de dégivrage 32, et non le volet 66, qui assure la calibration de la fuite d'air 65. Le volet de dégivrage 32 autorise un passage d'air froid sous sa partie avant afin d'acheminer un léger flux d'air froid dans la chambre de mixage, et principalement vers la sortie de dégivrage 24, comme schématisé par la flèche 84. Ce flux d'air 84 contribue ainsi à refroidir la température au sein de la sortie de dégivrage 24 afin de satisfaire l'exigence d'équilibre ou de stratification de température requise entre la sortie de dégivrage et la sortie de chauffage pieds concernées par ce mode de distribution. L'importance de la fuite d'air 84 est calibrée par la section de passage résultant du degré d'ouverture du volet 32 et par suite, de la section de passage entre l'extrémité avant du volet et le boîtier 4.

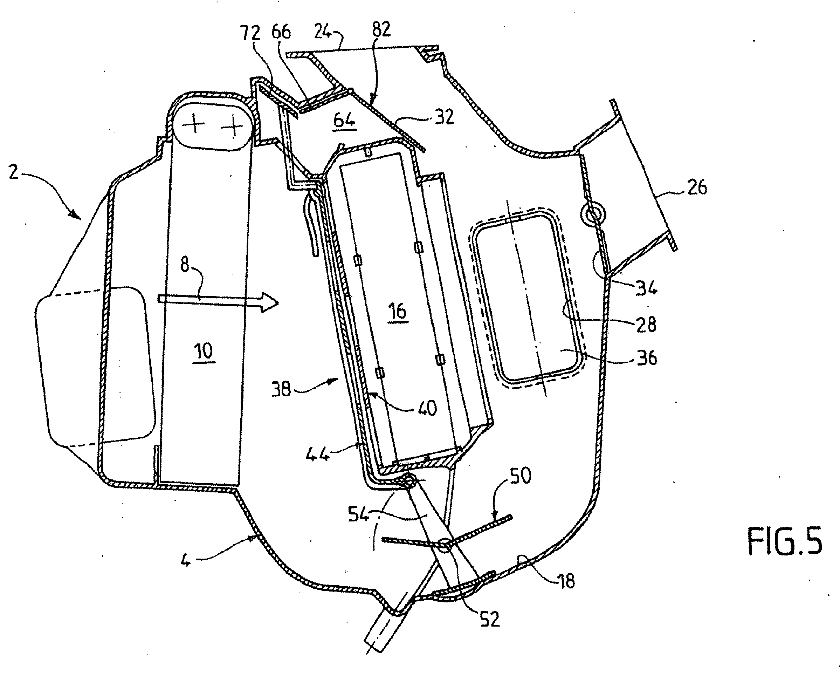

Sur la Figure 5, le dispositif de distribution d'air est en mode "dégivrage". Les volets 34 de ventilation et 36 de chauffage pieds sont fermés, tandis que le volet de dégivrage 32 est en position ouverte. Le dispositif de répartition d'air 38 est en mode "tout froid". Dans ce mode de distribution, il n'est pas utile de prévoir une fuite d'air froid vers la chambre de mixage 22 (voir Figure 1) car il s'agit d'un mode de distribution simple, c'est-à-dire un mode dans lequel l'air est diffusé par une sortie unique, la sortie de dégivrage 24. Il n'y a donc pas de stratification de température à gérer entre plusieurs sorties. Une petite fuite d'air pourrait néanmoins être envisagée pour parfaire l'homogénéité de température au sein de la sortie de dégivrage 24.

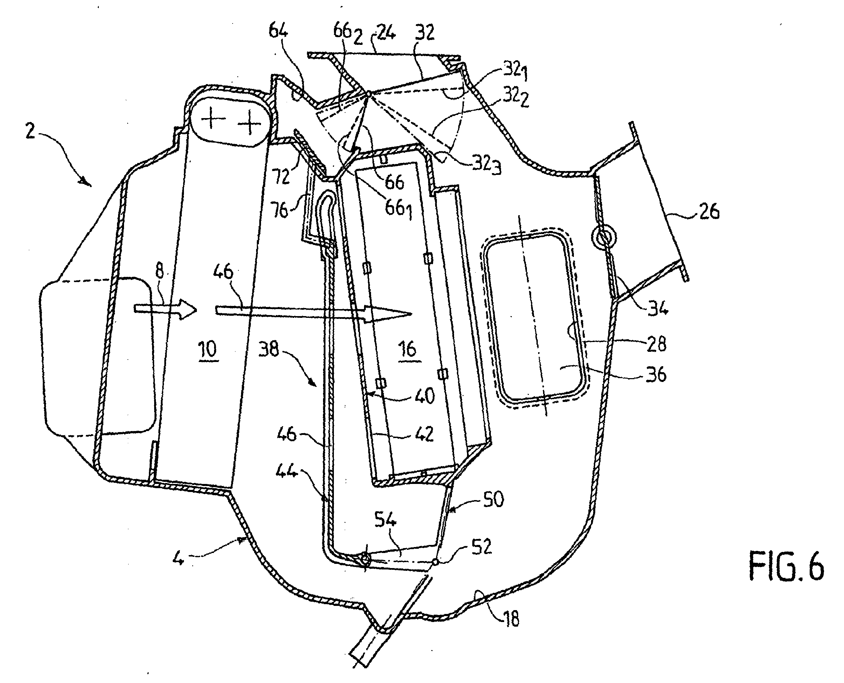

Sur la Figure 6, comme précédemment, les volets 34 de ventilation et 36 de chauffage pieds sont fermés. En revanche, les moyens de répartition 38 du flux d'air principal 8 sont en position "tout chaud". Dans cette configuration, la plaque obturatrice 44 est espacée du panneau 40. Les ajours 42 du panneau 40 sont en regard des découpes 46 de la plaque obturatrice 44, de telle sorte qu'un flux d'air chaud 46 traverse le radiateur 16. Au contraire, le volet d'air froid 50 est en position fermée, de telle sorte que l'air ne peut pas circuler par le conduit d'air froid 18.

Dans cette configuration, l'organe de calibration 66 et le volet 32, qui sont réalisés monobloc, sont propres à prendre au moins quatre positions :
- une première position dans laquelle l'organe de calibration 66 (représenté en trait plein) obture le conduit de fuite 64, tandis que le volet 32 (représenté en trait plein) obture le conduit de dégivrage 24 ;
- une deuxième position dans laquelle l'organe de calibration 66 (position 66₁) autorise des micro fuites en avant du radiateur de chauffage 16, tandis que le volet 32 (position 66₁) obture le conduit de dégivrage 24 ;
- une troisième position dans laquelle l'organe de calibration 66 (position 66₂) autorise des micro fuites en arrière du radiateur de chauffage 16, tandis que le volet 32 (position 32₂) ouvre le conduit de dégivrage 24 ; et
- une quatrième position dans laquelle le volet 32 (position 32₃) obture le conduit de fuite 64 et ouvre le conduit de dégivrage 24.

Le volet de dégivrage 32 peut prendre toutes les positions possibles entre la position entièrement fermée représentée en trait plein, et la position entièrement ouverte 32₃ représentée en trait mixte. Il peut ainsi être partiellement ouvert, comme représenté par les positions 32₁ et 32₂. Lorsque le volet de dégivrage 32 est en position entièrement ouverte ou en position entièrement fermée, le conduit de fuite 64 est obturé. En revanche, lorsqu'il est en position partiellement ouverte, comme les positions 32₁ et 32₂, une fuite d'air froid est possible à travers le conduit de fuite 64.

Or, dans une configuration "tout chaud" des moyens de répartition 38, une telle fuite n'est pas souhaitable parce qu'elle empêche d'atteindre la puissance thermique maximale générée par le radiateur de chauffage 36. C'est la raison pour laquelle on a prévu un clapet d'obturation 72 supporté par la plaque obturatrice 44 par l'intermédiaire d'une tige 76.

Lorsque la plaque 44 obture totalement ou partiellement les ajours 42 du panneau 40, le clapet 72 est écarté de l'ouverture de passage 74, permettant ainsi la circulation de l'air par le conduit de fuite 64. Au contraire, en position "tout chaud", le clapet 72 repose sur son siège prévu dans le boîtier 4 et obture le conduit de passage 64. Grâce à cette disposition, la totalité du flux d'air traverse le radiateur de chauffage, de telle sorte que la puissance thermique maximale de ce dernier peut être utilisée pour chauffer l'habitacle du véhicule.

Le clapet 72 peut également contribuer au calibrage de la fuite d'air froid, principalement quand la plaque obturatrice 44 quitte la position "tout chaud".

La localisation, les dimensions, le nombre, la forme du conduit de fuite additionnel d'air froid 64, de l'entrée 74 de ce conduit, et du clapet d'obturation 72 peuvent être adaptés aux besoins de la fonction et à l'espace disponible dans le boîtier.

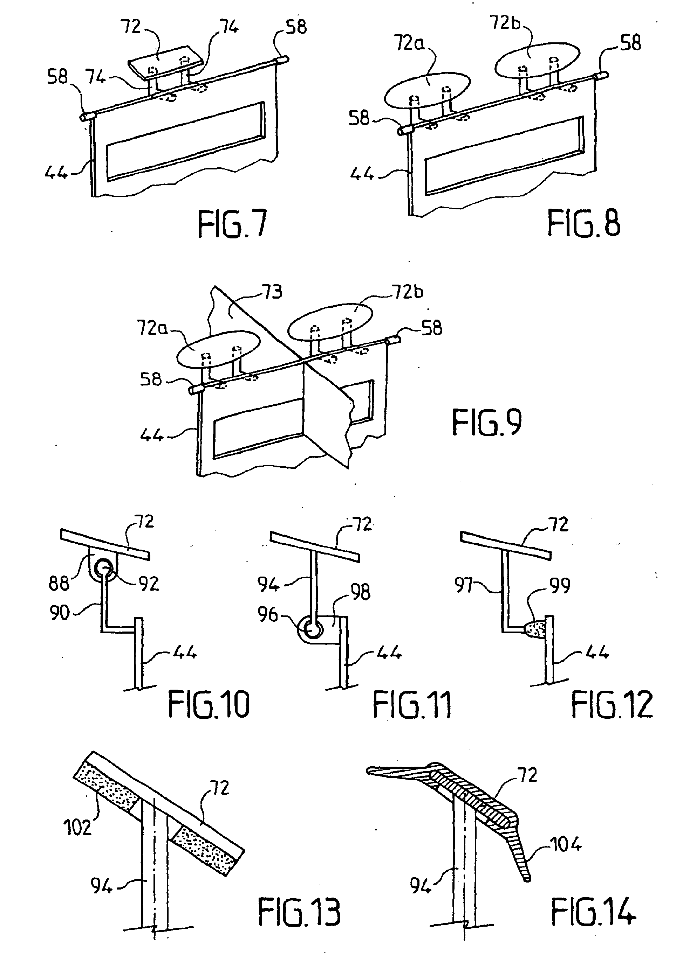

A titre d'exemple, on a représenté sur la Figure 7 une vue schématique en perspective d'un clapet d'obturation 72 rectangulaire implanté au centre du boîtier 4 de l'appareil de chauffage et/ou de climatisation. La Figure 8 représente une vue schématique en perspective d'un dispositif comprenant deux clapets 72a et 72b en forme d'ellipse, implantés latéralement dans le boîtier 4 de l'appareil. La Figure 9 montre un dispositif analogue à celui de la Figure 8 dans lequel le boîtier de l'appareil de chauffage et/ou de climatisation est divisé par une cloison 73 pour permettre une répartition droite/gauche créant ainsi deux canaux de fuite d'air, respectivement dans les côtés droit et gauche de l'habitacle du véhicule.

Le clapet d'obturation 72 du conduit d'air froid additionnel 66 peut être intégré à la plaque obturatrice 44, comme dans les exemples décrits précédemment, ou rapporté sur cette plaque, en constituant une pièce additionnelle. Dans le cas où il est rapporté, le clapet d'obturation peut être fixe, par exemple clipsé ou vissé. Il peut également être articulé pour mieux s'adapter, par exemple lors de son déplacement, à l'environnement du conduit additionnel d'air froid 66.

Les Figures 10, 11 et 12 représentent trois exemples de liaison articulée. Sur la Figure 10, le clapet d'obturation 72 comporte une ou deux pattes de fixation 88. Une tige 90 est montée en potence à l'extrémité supérieure de la plaque obturatrice 44. La tige 90 porte un axe 92 qui traverse les pattes 88. Sur la Figure 11, le clapet d'obturation 72 porte une ou deux tiges 94 comportant un axe 96 à son extrémité. L'axe 96 pivote dans un orifice prévu dans une ou plusieurs pattes 98 montées à l'extrémité supérieure de la plaque obturatrice 44. Sur la Figure 12, le clapet d'obturation 72 porte une tige coudée 97 dont l'extrémité est articulée sur la plaque obturatrice 44 par l'intermédiaire d'un surmoulage 99 en matière élastique, par exemple en SEBS (Styrène-Ethylène-Butadiène-Styrène). En variante ou en complément le surmoulage en matière élastique pourrait être placé entre la tige coudée 97 et le clapet d'obturation 72.
La course de déplacement du clapet d'obturation 72 dans le conduit additionnel d'air froid 66 peut être réduite par rapport à celle de la plaque obturatrice 44, ou plus généralement par rapport à celle d'un organe de mixage tel qu'un volet, ceci afin de mieux s'adapter à l'environnement du conduit 64.

Diverses solutions techniques peuvent être envisagées pour réaliser une étanchéité entre le clapet d'obturation 72 et l'orifice 74 prévu dans le boîtier 4. Par exemple, sur la Figure 13, le clapet d'obturation comporte un joint en mousse 102 disposé sous sa face inférieure. Sur la Figure 14, le clapet d'obturation comporte une lèvre d'étanchéité 104 surmoulée en matière élastique, par exemple en SEBS, ou bien le clapet d'obturation 72 peut être réalisé complètement en matière élastique comportant des lèvres intégrées.

L'invention trouve une application particulière aux véhicules automobiles.

## Revendications

1. Dispositif de génération d'un flux d'air à température réglée, notamment pour un appareil de chauffage et/ou de climatisation de l'habitacle d'un véhicule automobile ayant une chambre de mixage (22) et des sorties d'air (24, 26, 28) raccordées à cette chambre (22), le dispositif de génération comprenant au moins un conduit d'air froid (18), au moins un conduit d'air chaud (14) dans lequel est disposé un radiateur de chauffage (16), des moyens de répartition (38) d'un flux d'air principal (8) engendré par l'appareil de chauffage entre le conduit d'air froid (18) et le conduit d'air chaud (14), **caractérisé en ce qu'**il comporte au moins un conduit de fuite (64) autorisant au moins une fuite d'air froid (65) injectée dans la chambre de mixage (22) et un organe de calibration (66) pour régler la fuite d'air froid, cet organe étant actionné par une commande indépendante de la configuration des moyens de répartition (38).

2. Dispositif selon la revendication 1, **caractérisé en ce que** la commande de l'organe de calibration (66) est liée à la cinématique de l'un des volets de distribution (32, 34, 36) de l'appareil de chauffage et/ou de climatisation.

3. Dispositif selon la revendication 2, **caractérisé en ce que** l'organe de calibration (66) est lié à la cinématique du volet (32) du conduit de dégivrage (24).

4. Dispositif selon l'une des revendications 1 à 3, **caractérisé en ce que** l'organe de calibration (66) est réalisé d'une seule pièce (82) avec l'un des volets de distribution de l'appareil de chauffage et/ou de climatisation, par exemple le volet (32) du conduit de dégivrage (24).

5. Dispositif selon la revendication 4, **caractérisé en ce que** l'organe de calibration (66) et le volet (32) du conduit de dégivrage sont propres à prendre au moins quatre positions :
- une première position dans laquelle l'organe de calibration (66) obture le conduit de fuite (64), tandis que le volet (32) obture le conduit de dégivrage (24) ;
- une deuxième position dans laquelle l'organe de calibration (66) autorise des micro fuites en avant du radiateur de chauffage (16), tandis que le volet (32) obture le conduit de dégivrage (24) ;
- une troisième position dans laquelle l'organe de calibration (66) autorise des micro fuites en arrière du radiateur de chauffage (16), tandis que le volet (32) ouvre le conduit de dégivrage (24) ; et
- une quatrième position dans laquelle le volet (32) obture le conduit de fuite (64) et ouvre le conduit de dégivrage (24).

6. Dispositif selon l'une des revendications 1 à 5, **caractérisé en ce que** le conduit de fuite d'air froid (64) est situé au-dessus du conduit d'air chaud (14).

7. Dispositif selon l'une des revendications 1 à 5, **caractérisé en ce que** le conduit de fuite d'air froid (64) est situé latéralement par rapport au conduit d'air chaud (14).

8. Dispositif selon l'une des revendications 1 à 5, **caractérisé en ce que** le conduit de fuite d'air froid (64) est situé au dessus et latéralement par rapport au conduit d'air chaud (14).

9. Dispositif selon l'une des revendications 1 à 8, **caractérisé en ce qu'**il comporte un clapet d'obturation (72) du conduit de fuite (64) commandé indépendamment de la configuration des moyens de distribution (32, 34, 36).

10. Dispositif selon la revendication 9, **caractérisé en ce que** la commande du clapet d'obturation (72) est liée à la configuration des moyens de répartition (38).

11. Dispositif selon l'une des revendications 1 à 10, **caractérisé en ce que** les moyens de répartition (38) comportent au moins un panneau (40) comportant au moins un ajour (42) disposé dans le conduit d'air chaud (14), et une plaque obturatrice (44) mobile entre une position d'ouverture dans laquelle elle ne recouvre pas l'ajour (42) du panneau (40) et une position d'obturation dans laquelle elle obture le panneau (40), au moins un volet (50) de réglage de la section de passage du conduit d'air froid (18), mobile entre une position d'ouverture et une position d'obturation, un mécanisme de commande pour commander de manière synchronisée le déplacement de la plaque obturatrice (44) et le déplacement du volet de réglage (50) de la section de passage du conduit d'air froid (18) entre leur position d'ouverture et leur position de fermeture.

12. Dispositif selon la revendication 11, **caractérisé en ce que** le panneau (40) comporte une pluralité d'ajours (42) et la plaque obturatrice (44) une pluralité de découpes (46), les ajours du panneau (40) et les découpes (46) de la plaque obturatrice étant disposés les uns par rapport aux autres de telle manière que le conduit d'air chaud (14) est obturé quand la plaque obturatrice (44) est dans sa position d'obturation.

13. Dispositif selon l'une des revendications 11 et 12, **caractérisé en ce que** la plaque obturatrice (44) se déplace selon un mouvement combiné de translation et de rotation, la plaque obturatrice (44) étant écartée du panneau (40) en position d'ouverture.

14. Dispositif selon l'une des revendications 1 à 13, **caractérisé en ce qu'**il comporte un clapet d'obturation unique (72).

15. Dispositif selon l'une des revendications 1 à 13, **caractérisé en ce qu'**il comporte au moins deux clapets d'obturation (72a, 72b) implantés latéralement dans le boîtier (4) de l'appareil de chauffage et/ou de climatisation.

16. Dispositif selon l'une des revendications 1 à 15, **caractérisé en ce que** le clapet d'obturation (72) est intégré aux moyens de répartition (38, 44) du flux d'air principal (8).

17. Dispositif selon la revendication 16, **caractérisé en ce que** le clapet d'obturation (72) est rapporté sur les moyens de répartition (38, 44).

18. Dispositif selon la revendication 16, **caractérisé en ce que** le clapet d'obturation (72) est articulé sur les moyens de répartition (38, 44) par des moyens d'articulation (92 ; 96 99).

19. Dispositif selon la revendication 18, **caractérisé en ce que** les moyens d'articulation comprennent un surmoulage (99) en matière élastique.

20. Dispositif selon l'une des revendications 1 à 19, **caractérisé en ce que** la course de déplacement du clapet d'obturation (72) est réduite par rapport à celle des moyens de répartition (38, 44).

21. Dispositif selon l'une des revendications 1 à 20, **caractérisé en ce que** le clapet d'obturation (72) est muni de moyens d'étanchéité.

22. Dispositif selon la revendication 21, **caractérisé en ce que** les moyens d'étanchéité sont constitués par un joint en mousse (102).

23. Dispositif selon la revendication 21, **caractérisé en ce que** les moyens d'étanchéité sont constitués par une lèvre d'étanchéité (104).

24. Dispositif selon la revendication 23, **caractérisé en ce que** la lèvre d'étanchéité est intégrée au clapet d'obturation (72).

25. Dispositif selon la revendication 23, **caractérisé en ce que** la lèvre d'étanchéité (104) est surmoulée sur le clapet d'obturation (72).

26. Appareil de chauffage et/ou de climatisation de l'habitacle d'un véhicule automobile, **caractérisé en ce qu'**il comporte un dispositif de génération d'un flux d'air selon l'une des revendications 1 à 25.

## Claims

1. Device for generating an airflow at a regulated temperature, in particular for a heating and air-conditioning apparatus for the cabin of an automobile vehicle having a mixing chamber (22) and air outlets (24, 26, 28) connected to this chamber (22), the generation device including at least one cold air duct (18), at least one hot air duct (14) in which is positioned a heater core (16), distribution means (38) a main airflow (8) produced by the heating apparatus between the cold air duct (18) and the hot air duct (14), **characterised in that** it comprises at least one leakage duct (64) authorising at least one leakage of cold air (65) injected into the mixing chamber (22) and a calibration unit (66) in order to adjust the leakage of cold air, this unit being controlled by a control element that is independent of the configuration of the distribution means (38).

2. Device according to claim 1, **characterised in that** the control of the calibration unit (66) is connected to the kinematics of one of the distribution flaps (32, 34, 36) of the heating and air-conditioning apparatus.

3. Device according to claim 2, **characterised in that** the calibration unit (66) is connected to the kinematics of the flap (32) of the defrosting duct (24).

4. Device according to one of claims 1 to 3, **characterised in that** the calibration unit (66) is made of a single part (82) with one of the distribution flaps of the heating and air-conditioning apparatus, for example the flap (32) of the defrosting duct (24).

5. Device according to claim 4, **characterised in that** the calibration unit (66) and the flap (32) of the defrosting duct are suitable for having at least four positions:
- a first position in which the calibration unit (66) closes the leakage duct (64), while the flap (32) closes the defrosting duct (24);
- a second position in which the calibration unit (66) allows micro leakages before the heater core (16) while the flap (32) closes the defrosting duct (24);
- a third position in which the calibration unit (66) allows micro leakages behind the heater core (16), while the flap (32) opens the defrosting duct (24); and
- a fourth position in which the flap (32) closes the leakage duct (64) and opens the defrosting duct (24).

6. Device according to one of claims 1 to 5, **characterised in that** the cold air leakage duct (64) is located above the hot air duct (14).

7. Device according to one of claims 1 to 5, **characterised in that** the cold air leakage duct (64) is located laterally in relation to the hot air duct (14).

8. Device according to one of claims 1 to 5, **characterised in that** the cold air leakage duct (64) is located above and laterally in relation to the hot air duct (14).

9. Device according to one of claims 1 to 8, **characterised in that** it comprises an isolating valve (72) of the leakage duct (64) controlled independently of the configuration of the means of distribution (32, 34, 36).

10. Device according to claim 9, **characterised in that** the control of the isolating valve (72) is connected to the configuration of the means of distribution (38).

11. Device according to one of claims 1 to 10, **characterised in that** the distribution means (38) comprise at,least one panel (40) including at least one hole (42) located in the hot air duct (14), and a blanking plate (44) that is mobile between an open position in which it does not cover the hole (42) of the panel (40) and a closed position in which it closes the panel (40), at least one adjusting flap (50) of the passage section of the cold air duct (18), that is mobile between an open position and a closed position, a control mechanism for controlling in a synchronised manner the movement of the blanking plate (44) and the movement of the adjusting flap (50) of the passage section of the cold air duct (18) between their open position and their closed position.

12. Device according to claim 11, **characterised in that** the panel (40) comprises a plurality of holes (42) and the blanking plate (44) includes a plurality of cut outs (46), the holes of the panel (40) and the cut outs (46) of the blanking plate being positioned in relation to one another in such a way that the hot air duct (14) is closed when the blanking plate (44) is in its closed position.

13. Device according to one of claims 11 and 12, **characterised in that** the blanking plate (44) moves according to a combined movement of translation and rotation, the blanking plate (44) being pushed away from the panel (40) in open position.

14. Device according to one of claims 1 to 13, **characterised in that** it comprises a single isolating valve (72).

15. Device according to one of claims 1 to 13, **characterised in that** it comprises at least two isolating valves (72a, 72b) installed laterally in the housing (4) of the heating and air-conditioning apparatus.

16. Device according to one of claims 1 to 15, **characterised in that** the isolating valve (72) is integrated into the distribution means (38, 44) of the main air flow (8).

17. Device according to claim 16, **characterised in that** the isolating valve (72) is added to the distribution means (38, 44).

18. Device according to claim 16, **characterised in that** the isolating valve (72) is articulated around the distribution means (38, 44) by articulation means (92; 96; 99).

19. Device according to claim 18, **characterised in that** the articulation means comprise an overmoulding part (99) made of elastic material.

20. Device according to one of claims 1 to 19, **characterised in that** the travel of the movement of the isolating valve (72) is reduced in relation to that of the distribution means (38, 44).

21. Device according to one of claims 1 to 20, **characterised in that** the isolating valve (72) is equipped with sealing means.

22. Device according to claim 21, **characterised in that** the sealing means are constituted of a rubber seal (102).

23. Device according to claim 21, **characterised in that** the sealing means are constituted of a sealing lip (104).

24. Device according to claim 23, **characterised in that** the sealing lip is integrated into the isolating valve (72).

25. Device according to claim 23, **characterised in that** the sealing lip (104) is overmoulded on the isolating plug (72).

26. Automobile vehicle cabin heating and air-conditioning apparatus, **characterised in that** it comprises a device for generating a flow of air according to one of claims 1 to 25.

## Patentansprüche

1. Vorrichtung zur Erzeugung eines Luftstroms mit geregelter Temperatur, insbesondere für ein Heiz-und/oder Klimagerät der Fahrgastzelle eines Kraftfahrzeugs mit einer Mischkammer (22) und Luftauslässen (24,26,28), die mit dieser Kammer (22) verbunden sind, wobei die Erzeugungsvorrichtung zumindest eine Kaltluftleitung (18), zumindest eine Heißluftleitung (14), in der ein Heizradiator (16) angeordnet ist, Verteilungsmittel (38) für einen Hauptluftstrom (8) umfasst, der vom Heizgerät zwischen der Kaltluftleitung (18) und der Heißluftleitung (14) erzeugt wird, **dadurch gekennzeichnet, dass** sie zumindest einen Ableitungskanal (64), der zumindest eine in die Mischkammer (22) eingeblasene Kaltluftableitung (65) zulässt, und ein Kalibrierungsorgan (66) besitzt, um die Kaltluftableitung zu regeln, wobei dieses Organ durch eine von der Konfiguration der Verteilungsmittel (38) unabhängige Steuerung angetrieben wird.

2. Vorrichtung nach Anspruch 1, **dadurch gekennzeichnet, dass** die Steuerung des Kalibrierungsorgans (66) mit der Kinematik von einer der Verteilerklappen (32,34,36) des Heiz- und/oder Klimageräts zusammenhängt.

3. Vorrichtung nach Anspruch 2, **dadurch gekennzeichnet, dass** das Kalibrierungsorgan (66) mit der Kinematik der Klappe (32) der Enteisungsleitung (24) zusammenhängt.

4. Vorrichtung nach einem der Ansprüche 1 bis 3, **dadurch gekennzeichnet, dass** das Kalibrierungsorgan (66) aus einem einzigen Teil (82) mit einer der Verteilerklappen des Heiz- und/oder Klimageräts, zum Beispiel der Klappe (32) der Enteisungsleitung (24), gebildet wird.

5. Vorrichtung nach Anspruch 4, **dadurch gekennzeichnet, dass** das Kalibrierungsorgan (66) und die Klappe (32) der Enteisungsleitung imstande sind, zumindest vier Positionen einzunehmen:
- eine erste Position, in der das Kalibrierungsorgan (66) den Ableitungskanal (64) verschließt, während die Klappe (32) die Enteisungsleitung (24) verschließt;
- eine zweite Position, in der das Kalibrierungsorgan (66) Mikroableitungen vor dem Heizradiator (16) zulässt, während die Klappe (32) die Enteisungsleitung (24) verschließt;
- eine dritte Position, in der das Kalibrierungsorgan (66) Mikroableitungen nach dem Heizradiator (16) zulässt, während die Klappe (32) die Enteisungsleitung (24) öffnet; und
- eine vierte Position, in der die Klappe (32) den Ableitungskanal (64) verschließt und die Enteisungsleitung (24) öffnet.

6. Vorrichtung nach einem der Ansprüche 1 bis 5, **dadurch gekennzeichnet, dass** der Kaltluftableitungskanal (64) über der Heißluftleitung (14) angeordnet ist.

7. Vorrichtung nach einem der Ansprüche 1 bis 5, **dadurch gekennzeichnet, dass** der Kaltluftableitungskanal (64) im Verhältnis zur Heißluftleitung (14) seitlich angeordnet ist.

8. Vorrichtung nach einem der Ansprüche 1 bis 5, **dadurch gekennzeichnet, dass** der Kaltluftableitungskanal (64) im Verhältnis zur Heißluftleitung (14) darüber und seitlich angeordnet ist.

9. Vorrichtung nach einem der Ansprüche 1 bis 8, **dadurch gekennzeichnet, dass** sie eine Verschlussklappe (72) des Ableitungskanals (64) umfasst, die unabhängig von der Konfiguration der Verteilermittel (32,34,36) gesteuert wird.

10. Vorrichtung nach Anspruch 9, **dadurch gekennzeichnet, dass** die Steuerung der Verschlussklappe (72) mit der Konfiguration der Verteilungsmittel (38) zusammenhängt.

11. Vorrichtung nach einem der Ansprüche 1 bis 10, **dadurch gekennzeichnet, dass** die Verteilungsmittel (38) zumindest eine Platte (40) mit zumindest einem in der Heißluftleitung (14) angeordneten Durchbruch (42); und eine Abschlussplatte (44), die zwischen einer Öffnungsposition, in der sie den Durchbruch (42) der Platte (40) nicht abdeckt, und einer Verschlussposition, in.der sie die Platte (40) verschließt, beweglich ist; zumindest eine Klappe (50) zur Regulierung des Durchlassquerschnitts der Kaltluftleitung (18), wobei diese zwischen einer Öffnungsposition und einer Verschlussposition beweglich ist; einen Steuerungsmechanismus umfassen, um in synchronisierter Weise das Verschieben der Abschlussplatte (44) und das Verschieben der Regulierklappe (50) des Durchlassquerschnitts der Kaltluftleitung (18) zwischen ihrer Öffnungsposition und ihrer Verschlussposition zu steuern.

12. Vorrichtung nach Anspruch 11, **dadurch gekennzeichnet, dass** die Platte (40) eine Vielzahl von Durchbrüchen (42) und die Abschlussplatte (44) eine Vielzahl von Ausschnitten (46) aufweisen, wobei die Durchbrüche der Platte (40) gegenüber den Ausschnitten (46) der Abschlussplatte so angeordnet sind, dass die Heißluftleitung (14) verschlossen ist, wenn sich die Abschlussplatte (44) in ihrer Verschlussposition befindet.

13. Vorrichtung nach einem der Ansprüche 11 und 12, **dadurch gekennzeichnet, dass** sich die Abschlussplatte (44) gemäß einer Kombination aus Translations- und Rotationsbewegung bewegt, wobei die Abschlussplatte (44) in der Öffnungsposition von der Platte (40) beabstandet ist.

14. Vorrichtung nach einem der Ansprüche 1 bis 13, **dadurch gekennzeichnet, dass** sie eine Einzelverschlussklappe (72) aufweist.

15. Vorrichtung nach einem der Ansprüche 1 bis 13, **dadurch gekennzeichnet, dass** sie zumindest zwei Verschlussklappen (72a,72b) aufweist, die im Gehäuse (4) des Heiz-und/oder Klimageräts seitlich angesiedelt sind.

16. Vorrichtung nach einem der Ansprüche 1 bis 15, **dadurch gekennzeichnet, dass** die Verschlussklappe (72) in die Verteilungsmittel (38,44) des Hauptluftstroms (8) integriert ist.

17. Vorrichtung nach Anspruch 16, **dadurch gekennzeichnet, dass** die Verschlussklappe (72) mit den Verteilungsmitteln (38,44) verbunden ist.

18. Vorrichtung nach Anspruch 16, **dadurch gekennzeichnet, dass** die Verschlussklappe (72) mittels Gelenkmittel (92,96,99) auf den Verteilungsmitteln (38,44) gelenkig gelagert ist.

19. Vorrichtung nach Anspruch 18, **dadurch gekennzeichnet, dass** die Gelenkmittel eine Überform (99) aus elastischem Material umfassen.

20. Vorrichtung nach einem der Ansprüche 1 bis 19, **dadurch gekennzeichnet, dass** der Bewegungsbereich der Verschlussklappe (72) im Verhältnis zu jenem der Verteilungsmittel (38,44) reduziert ist.

21. Vorrichtung nach einem der Ansprüche 1 bis 20, **dadurch gekennzeichnet, dass** die Verschlussklappe (72) mit Dichtungsmitteln ausgestattet ist.

22. Vorrichtung nach Anspruch 21, **dadurch gekennzeichnet, dass** die Dichtungsmittel durch eine Schaumdichtung (102) gebildet werden.

23. Vorrichtung nach Anspruch 21, **dadurch gekennzeichnet, dass** die Dichtungsmittel durch eine Dichtlippe (104) gebildet werden.

24. Vorrichtung nach Anspruch 23, **dadurch gekennzeichnet, dass** die Dichtlippe in der Verschlussklappe (72) integriert ist.

25. Vorrichtung nach Anspruch 23, **dadurch gekennzeichnet, dass** die Dichtlippe (104) die Verschlussklappe (72) überformt.

26. Heiz- und/oder Klimagerät der Fahrgastzelle eines Kraftfahrzeugs, **dadurch gekennzeichnet, dass** es eine Vorrichtung zur Erzeugung eines Luftstroms nach einem der Ansprüche 1 bis 25 umfasst.
